Europäisches Patentamt

European Patent Office

Office européen des brevets

(11) Publication number: **0 270 312 B1**

# EUROPEAN PATENT SPECIFICATION

(45) Date of publication of patent specification: 20.03.91   (51) Int. Cl.5: **B60K 11/04, F28F 9/00**

(21) Application number: **87310484.8**

(22) Date of filing: **27.11.87**

(54) Mounting arrangement.

(30) Priority: **02.12.86 GB 8628764**

(43) Date of publication of application:
**08.06.88 Bulletin 88/23**

(45) Publication of the grant of the patent:
**20.03.91 Bulletin 91/12**

(84) Designated Contracting States:
**AT BE CH DE ES FR GB IT LI NL SE**

(56) References cited:
**EP-A- 0 226 914**
**DE-B- 1 211 501**
**FR-A- 2 145 383**

**PATENT ABSTRACTS OF JAPAN, Vol. 10, no.
44 (M-455)(2101), 21th February, 1986; & JP -
A - 60 195 324 (Nissan) 03-10-1985**

(73) Proprietor: **FORD MOTOR COMPANY LIMITED
Eagle Way
Brentwood Essex CM13 3BW(GB)BE CH GB
IT LI NL SE AT**

Proprietor: **FORD FRANCE SOCIETE AN-
ONYME
344 Avenue Napoléon Bonaparte B.P. 307
F-92506 Rueil Malmaison Cedex(FR)FR**

Proprietor: **FORD-WERKE AKTIENGESELL-
SCHAFT
Werk Köln-Niehl Henry-Ford-Strasse Post-
fach 60 40 02
W-5000 Köln 60(DE)DE**

Proprietor: **FORD MOTOR COMPANY
County of Wayne
Dearborn, MI 48120(US)ES**

(72) Inventor: **Davis, Raymond James
54 Hamberts Road
South Woodham Ferrers Essex(GB)**
Inventor: **Hallam, Edwin
86 Marlborough Gardens
Upminster Essex(GB)**

(74) Representative: **Messulam, Alec Moses et al
A. Messulam & Co. 24 Broadway
Leigh on Sea Essex SS9 1BN(GB)**

Rank Xerox (UK) Business Services

## Description

This invention relates to a mounting arrangement for mounting a cooling system radiator in a motor vehicle. The radiator is conventionally mounted at the front of the vehicle, so that air is driven through the radiator when the vehicle is moving.

FR-A-2 145 383 discloses a radiator construction with two vertically oriented end tanks with a tube and fin core running between the end tanks. The tanks are also connected by top and bottom rails, and the radiator is connected to the vehicle in which it is mounted by mounting supports fixed on the rails.

Amongst the objects of the invention are the objects of simplifying radiator construction, simplifying assembly of the radiator into a vehicle, and making the radiator construction better able to resist any minor distortions or twisting of the vehicle bodywork.

According to the present invention, there is provided a mounting arrangement for mounting a cooling system radiator in a motor vehicle, the arrangement comprising a radiator and vehicle body members for supporting the radiator in the vehicle, the radiator having two vertically oriented end tanks with a tube and fin core extending between the tanks and the vehicle body members comprising upper and lower mounting supports attached to the vehicle bodywork, characterised in that each end tank includes, at its lower end, a tapered foot and at its upper end a bracket with an attachment aperture, and wherein the lower mounting support has upwardly open slots into which the tapered feet can be fitted to locate the bottom ends of the tanks and the upper mounting support has means for connecting the brackets with the attachment apertures to itself.

An arrangement as set out above allows very rapid and accurate fitting of the radiator to the vehicle simply by lowering the tapered feet into their slots and then connecting the apertures at the tops of the tanks to the upper mounting support. Furthermore the use of tapered feet located in slots allows a small degree of relative movement between the radiator and the vehicle body members. This movement is helpful because radiators are not particularly tolerant of flexing and twisting distortions, and such distortions may occur, on a very small scale, in the vehicle body during use. If the radiator was bolted to the body at each corner, any such movement of the body would be transmitted to the radiator, but the lost motion afforded by the tapered foot/slot location allows for some isolation of the radiator from flexing movements of the body.

The upper and lower mounting supports are preferably metal cross-members which are parallel to one another.

Bolts, preferably with plastics spacers/washers may be used to connect the apertures to corresponding apertures in the upper mounting support.

According to a second aspect of the invention, there is provided a radiator for a vehicle cooling system, the radiator having two vertically oriented end tanks with a tube and fin core extending between the tanks, characterised in that each tank has at its lower end a tapered foot and at its upper end a bracket with an aperture, the feet and the brackets being adapted for attaching the radiator to a vehicle.

The tanks are preferably of plastics. The tapered feet preferably comprise downwardly directed lugs on which triangular section insulators are fitted. The insulators are preferably of a soft elastic or rubber material.

The radiator core is preferably of aluminium and can conveniently be a mechanically assembled core, but soldered or brazed cores are also possible.

The invention will now be further described, by way of example, with reference to the accompanying drawings, in which:

Figure 1 is a front elevation of a radiator according to the invention;

Figure 2 is an end view of the radiator of Figure 1;

Figure 3 is an end view of the radiator mounted in a vehicle; and

Figure 4 is a section through a foot of the radiator.

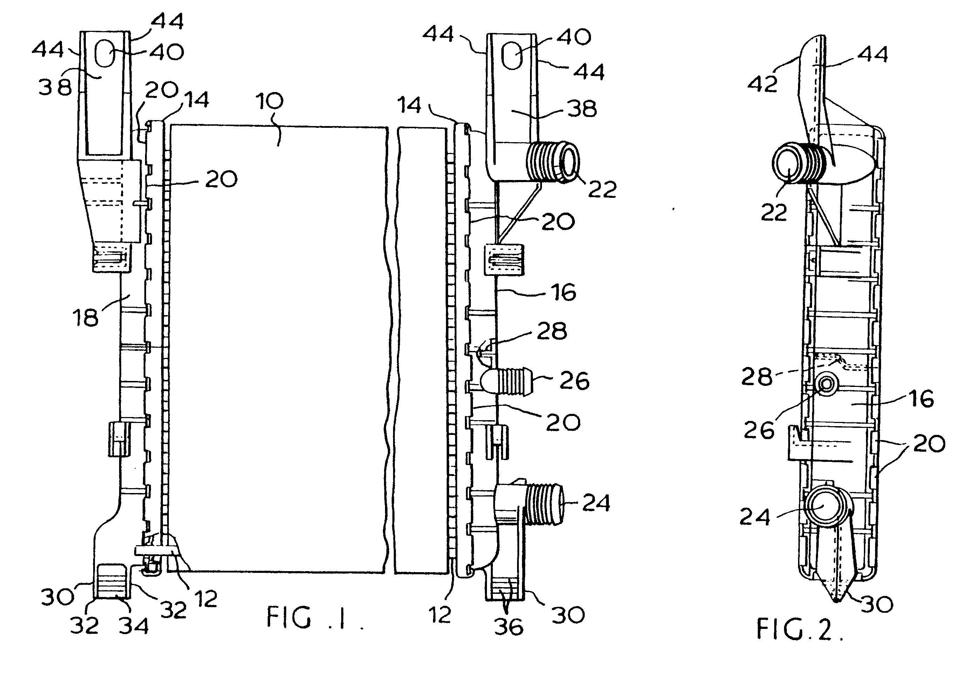

The radiator shown in Figure 1 has a core 10 made up from horizontal aluminium tubes 12 with vertical aluminium fins supported on the tubes. The fins and tubes form a so-called mechanically assembled radiator core in which the fins are force-fitted onto the tubes to form an intimate, heat-conducting joint between them.

At each end of the core, a header plate 14 is fitted on the ends of the tubes, and a tank 16 or 18 is mounted on the plate. The tank and the plate are sealed together by bending over tangs 20 formed on the edge of the header plate, to grip a peripheral moulded flange at the edge of the tank. The tank 18 has a water inlet connection 22 and an outlet connection 24 and a degas return spigot 26. An internal wall 28 prevents water flowing directly from the inlet 22 to the outlet 24 without passing through the core 10.

At the bottom end of each tank is a tapered lug 30. These lugs project below the bottom face of the core 10 and are formed by triangular end walls 32 connected by a web 34 with supporting ribs 36. The dimension across the end walls 32 is between 15 and 35 mm, preferably 25 mm. The end view of Figure 2 shows that the feet are arranged on the vertical centre line of the tanks.

At the top of each tank there is an upwardly extending bracket 38 with an elongate aperture 40. These brackets extend above the top of the core, and are moulded integrally with the core. The brackets each have a flat face 42 which lies in a plane parallel to that of the core 10, and lateral webs 44 which support the face 42. The flat faces 42 of these brackets lie in a plane which is parallel to a line joining the tapered feet 30.

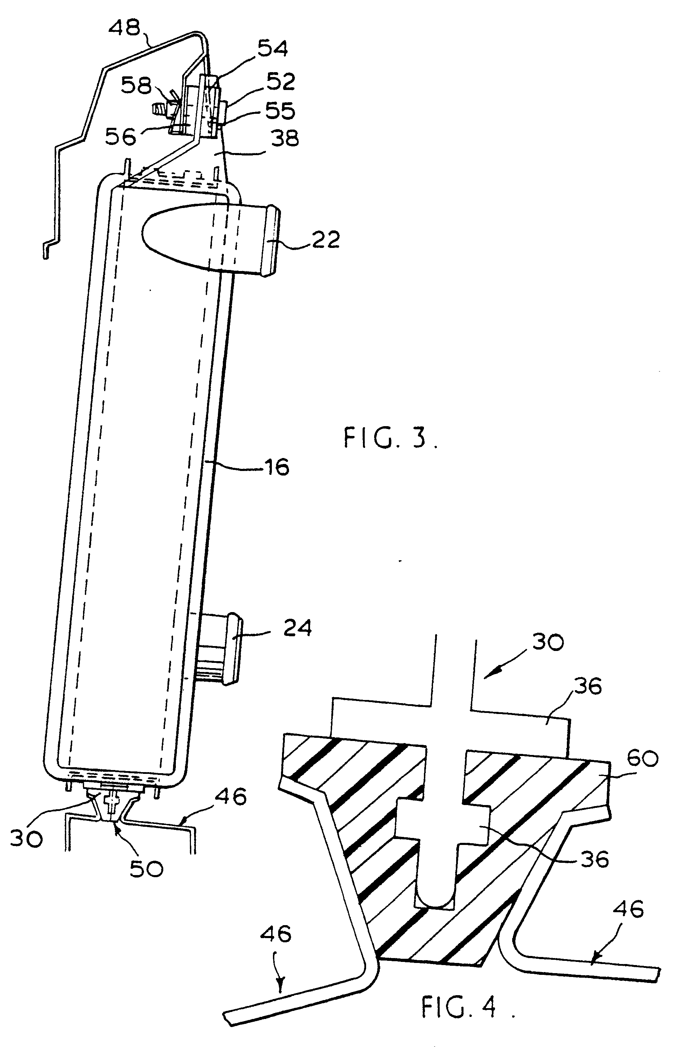

Figure 3 shows the radiator of Figures 1 and 2 in relation to a lower cross member 46 and an upper cross member 48. The lower cross member has a slot 50 for receiving the tapered foot 30. The slot is formed by constructing the necessary gap between the mating faces of two sheet metal members which together make up the lower cross member. The shape of the slot corresponds to the shape of an insulating foot 60 (Figure 4) which is a push fit onto the lug 30. The foot 60 is of relatively soft, elastic material so that it can deform to absorb any distortion which may occur between the upper and lower cross members, and thus prevent this distortion from being applied to the radiator itself.

The brackets 38 are bolted to the upper cross member 48 by a single bolt 52 at each end which is screwed into a weldnut 58 fixed on the upper cross member 48. Figure 3 shows how isolating washers 54 and 56 and a spacer 55 are used to space and isolate the lugs from the cross member.

To install the radiator using this arrangement, it is only necessary to lower the radiator into position so that the feet 60 engage in the slots 50. This can be done with the radiator at an angle to the vertical. The radiator can then be pivoted to the upright position whereupon the flat faces 44, which lie in a plane parallel to the pivot axis defined by the positions of the feet themselves, come into position against the upper cross member 48. The bolts 52 in the brackets 38 are then screwed into the weldnuts 58 at each end. Thus only two fastenings have to be done up which makes radiator installation very simple.

## Claims

1. A mounting arrangement for mounting a cooling system radiator in a motor vehicle, the arrangement comprising a radiator and vehicle body members (46, 48) for supporting the radiator in the vehicle, the radiator having two vertically oriented end tanks (16, 18) with a tube and fin core (10, 12) extending between the tanks and the vehicle body members comprising upper (46) and lower (48) mounting supports attached to the vehicle bodywork, characterised in that each end tank (16, 18) includes, at its lower end, a tapered foot (30) and at its upper end a bracket (38) with an attachment aperture (40), and wherein the lower mounting support (46) has upwardly open slots (50) into which the tapered feet (30) can be fitted to locate the bottom ends of the tanks and the upper mounting support (48) has means for connecting the brackets (38) with the attachment apertures (40) to itself.

2. A mounting arrangement as claimed in Claim 1, wherein the upper and lower mounting supports are metal cross-members (46, 48) which are parallel to one another.

3. A mounting arrangement as claimed in Claim 1 or Claim 2, wherein bolts (52) are used to connect the apertures (40) to corresponding apertures in the upper mounting support (48).

4. A mounting arrangement as claimed in Claim 3, wherein plastics spacers (55) are fitted on the bolts (52).

5. A radiator for a vehicle cooling system, the radiator having two vertically oriented end tanks (16, 18) with a tube and fin core (10, 12) extending between the tanks, characterised in that each tank has at its lower end a tapered foot (30) and at its upper end a bracket (38) with an aperture (40), the feet (30) and the brackets (38) being adapted for attaching the radiator to a vehicle.

6. A radiator as claimed in Claim 5, wherein the end tanks (16, 18) are of plastics material.

7. A radiator as claimed in Claim 6, wherein the feet (30) comprise elastic feet (60) fitted to lugs (30) integrally moulded with the end tanks (16, 18).

8. A radiator as claimed in any one of Claims 5 to 7, wherein the feet (30) lie on a vertical centre line of the radiator.

9. A radiator as claimed in any one of Claims 5 to 8, wherein the apertures (40) lie in a plane parallel to the plane of the core (10).

10. A radiator as claimed in any one of Claims 5 to 9, wherein the feet (30) are wedge-shaped and have a longitudinal dimension, and the longitudinal dimension lies parallel to the plane of the radiator core (10), and a line joining the two feet (30) is also parallel to the same plane.

11. A radiator as claimed in Claim 10, wherein the longitudinal dimension of each foot (30) is between 15 and 35 mm.

12. A radiator as claimed in Claim 11, wherein the longitudinal dimension is substantially 25 mm.

13. A radiator as claimed in any one of Claims 5 to 12, wherein the radiator core (10) is of aluminium and the fins and tubes are mechanically assembled.

**Revendications**

1. Dispositif de montage pour le montage du radiateur d'un système de refroidissement dans un véhicule à moteur, le dispositif comprenant un radiateur et des éléments de carrosserie de véhicule (46, 48) pour supporter le radiateur dans le véhicule, le radiateur comportant deux réservoirs d'extrémité (16, 18) orientés verticalement avec un faisceau de tubes et d'ailettes (10, 12) s'étendant entre les réservoirs, et les éléments de carrosserie de véhicule comprenant des supports de montage supérieur (46) et inférieur (48) attachés à la carrosserie du véhicule, caractérisé en ce que chaque réservoir d'extrémité (16, 18) comporte, à son extrémité inférieure, un pied rétréci (30) et à son extrémité supérieure une patte (38) présentant une ouverture de fixation (40), et dans lequel le support de montage inférieur (46) présente des fentes ouvertes vers le haut (50) dans lesquelles les pieds rétrécis (30) peuvent être ajustés pour positionner les extrémités inférieures des réservoirs et le support de montage supérieur (48) comporte des moyens pour raccorder les pattes (38) pourvues des ouvertures de fixation (40) au support lui-même.

2. Dispositif de montage suivant la revendication 1, dans lequel les supports de montage supérieur et inférieur sont des entretoises métalliques (46, 48) parallèles l'une à l'autre.

3. Dispositif de montage suivant la revendication 1 ou la revendication 2, dans lequel on utilise des boulons (52) pour raccorder les ouvertures (40) à des ouvertures correspondantes prévues dans le support de montage supérieur (48).

4. Dispositif de montage suivant la revendication 3, dans lequel des pièces d'écartement en plastique (55) sont montées sur les boulons (52).

5. Radiateur pour un système de refroidissement d'un véhicule, le radiateur comportant deux réservoirs d'extrémité (16, 18) orientés verticalement avec un faisceau de tubes et d'ailettes (10, 12) s'étendant entre les réservoirs, caractérisé en ce que chaque réservoir présente à son extrémité inférieure un pied rétréci (30) et à son extrémité supérieure une patte (38) avec une ouverture (40), les pieds (30) et les pattes (38) étant conçus pour attacher le radiateur à un véhicule.

6. Radiateur suivant la revendication 5, dans lequel les réservoirs d'extrémité (16, 18) sont en matière plastique.

7. Radiateur suivant la revendication 6, dans lequel les pieds (30) comprennent des pieds élastiques (60) ajustés sur des talons (30) intégralement moulés avec les réservoirs d'extrémité (16, 18).

8. Radiateur suivant l'une ou l'autre des revendications 5 à 7, dans lequel les pieds (30) sont situés sur une ligne de centre verticale du radiateur.

9. Radiateur suivant l'une ou l'autre des revendications 5 à 8, dans lequel les ouvertures (40) sont situées dans un plan parallèle au plan du faisceau (10).

10. Radiateur suivant l'une ou l'autre des revendications 5 à 9, dans lequel les pieds (30) ont la forme de coins et présentent une dimension longitudinale, où la dimension longitudinale est parallèle au plan du faisceau (10) du radiateur, et où une ligne joignant les deux pieds (30) est également parallèle au même plan.

11. Radiateur suivant la revendication 10, dans lequel la dimension longitudinale de chaque pied (30) est comprise entre 15 et 35 mm.

12. Radiateur suivant la revendication 11, dans lequel la dimension longitudinale est substantiellement égale à 25 mm.

13. Radiateur suivant l'une ou l'autre des revendications 5 à 12, dans lequel le faisceau (10) du radiateur est en aluminium et où les ailettes et les tubes sont assemblés mécaniquement.

**Ansprüche**

1. Montageanordnung zum Montieren eines Kühlsystem-Kühlers in einem Kraftfahrzeug, wobei die Anordnung einen Kühler und Fahrzeugkörperelemente (46, 48) zum Stützen des Kühlers im Fahrzeug umfaßt und der Kühler zwei senkrecht ausgerichtete Endwasserkästen (16, 18) mit einem Rippenrohrkern (l0, 12) aufweist, der sich zwischen den Wasserkästen erstreckt, und wobei die Fahrzeugkörperelemente obere (46) und untere (48) an der Fahrzeugkarosserie befestigte Montagestützen umfassen, dadurch gekennzeichnet, daß jeder Endwasserkasten (16, 18) an seinem unteren Ende einen sich verjüngenden Fuß (30) und an seinem oberen Ende eine Klammer (38) mit einer Befestigungsöffnung (40) einschließt, und daß die untere Montagestütze (46) nach oben offene Schlitze (50) aufweist, in die die sich verjüngenden Füße (30) zur Lokalisierung der unteren Enden der Wasserkästen eingepaßt werden können, und die obere Montagestütze (48) ein Mittel aufweist, mit dessen Hilfe die Klammern (38) mit den Befestigungsöffnungen (40) mit jener Stütze (48) verbunden wird.

2. Montageanordnung nach Anspruch 1, bei der es sich bei den oberen und unteren Montagestützen um Metallquerträger (46, 48) handelt, die parallel zueinander liegen.

3. Montageanordnung nach Anspruch 1 oder 2, bei der zur Verbindung der Öffnungen (40) mit entsprechenden Öffnungen in der oberen Montagestütze (48) Bolzen (52) verwendet werden.

4. Montageanordnung nach Anspruch 3, bei der Abstandhalter (55) aus Kunststoff auf den Bolzen (52) angebracht sind.

5. Kühler für ein Fahrzeugkühlsystem, der zwei senkrecht ausgerichtete Wasserkästen (16, 18) mit einem Rippenrohrkern (10, 12) aufweist, der sich zwischen den Wasserkästen erstreckt, dadurch gekennzeichnet, daß jeder Wasserkasten an seinem unteren Ende einen sich verjüngenden Fuß (30) und an seinem oberen Ende eine Klammer (38) mit einer Öffnung (40) aufweist, wobei mit Hilfe der Füße (30) und der Klammern (38) der Kühler an einem Fahrzeug befestigt werden kann.

6. Kühler nach Anspruch 5, bei dem die Endwasserkästen (16, 18) aus Kunststoff bestehen.

7. Kühler nach Anspruch 6, bei dem die Füße (30) elastische Füße (60) umfassen, die an einstückig an den Endwasserkästen (16, 18) angeformten Nasen (30) angebracht sind.

8. Kühler nach einem der Ansprüche 5 bis 7, bei dem die Füße (30) auf einer senkrechten Mittellinie des Kühlers liegen.

9. Kühler nach einem der Ansprüche 5 bis 8, bei dem die Öffnungen (40) in einer zur Ebene des Kerns (10) parallelen Ebene liegen.

10. Kühler nach einem der Ansprüche 5 bis 9, bei dem die Füße (30) keilförmig sind und sich in Längsrichtung erstrecken, wobei diese Erstreckung in Längsrichtung parallel zur Ebene des Kühlerkerns (10) liegt und eine die beiden Füße (30) miteinander verbindende Linie ebenfalls parallel zu derselben Ebene liegt.

11. Kühler nach Anspruch 10, bei dem sich jeder Fuß (30) zwischen 15 und 35 mm in Längsrichtung erstreckt.

12. Kühler nach Anspruch 11, bei dem die Erstreckung in Längsrichtung im wesentlichen 25 mm beträgt.

13. Kühler nach einem der Ansprüche 5 bis 12, bei dem der Kühlerkern (10) aus Aluminium besteht und die Rippen und Röhren im Baukastenprinzip zusammengebaut werden.

FIG .I .

FIG.2.

EP 0 270 312 B1

FIG. 3.

FIG. 4.